(19) Europäisches Patentamt
European Patent Office
Office européen des brevets

(11) EP 1 470 663 B1

(12) **FASCICULE DE BREVET EUROPEEN**

(45) Date de publication et mention de la délivrance du brevet:
**30.08.2006 Bulletin 2006/35**

(21) Numéro de dépôt: **03715045.5**

(22) Date de dépôt: **23.01.2003**

(51) Int Cl.:
***H04L 9/32*** *(2006.01)*

(86) Numéro de dépôt international:
**PCT/FR2003/000227**

(87) Numéro de publication internationale:
**WO 2003/063413 (31.07.2003 Gazette 2003/31)**

# (54) PROCEDE DE GENERATION ET DE VERIFICATION DE SIGNATURES ELECTRONIQUES

VERFAHREN ZUR ERZEUGUNG UND VERIFIZIERUNG DIGITALER UNTERSCHRIFTEN

METHOD FOR GENERATING AND VERIFYING ELECTRONIC SIGNATURES

(84) Etats contractants désignés:
**AT BE BG CH CY CZ DE DK EE ES FI FR GB GR HU IE IT LI LU MC NL PT SE SI SK TR**

(30) Priorité: **24.01.2002 FR 0200967**

(43) Date de publication de la demande:
**27.10.2004 Bulletin 2004/44**

(73) Titulaire: **GEMPLUS**
**13420 Gemenos (FR)**

(72) Inventeur: **BROUCHIER, Julien**
**F-83210 LA FARLEDE (FR)**

(56) Documents cités:
**EP-A- 0 689 316**
**WO-A-00/31644**
**FR-A- 2 733 378**

- **SPALKA A ET AL: "Protecting the creation of digital signatures with Trusted Computing Platform technology against attacks by Trojan horse programs" , TRUSTED INFORMATION. NEW DECADE CHALLENGE. IFIP TC11 16TH INTERNATIONAL CONFERENCE ON INFORMATION SECURITY (IFIP/SEC'01), PROCEEDINGS OF 16TH INTERNATIONAL INFORMATION SECURITY CONFERENCE, PARIS, FRANCE, 11-13 JUNE 2001 , 2001, NORWELL, MA, USA, KLUWER ACADEMIC PUBLISHERS, USA, PAGE(S) 403 - 419 XP001126260 ISBN: 0-7923-7389-8 abrégé page 405, ligne 20 - ligne 38 page 411, ligne 19 - dernière ligne page 413, ligne 36 -page 414, ligne 13 page 416, ligne 23 - ligne 32**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 1 470 663 B1

Printed by Jouve, 75001 PARIS (FR)

## Description

L'invention concerne un procédé de génération et de vérification de signatures électroniques de messages. électroniques.

Le procédé de l'invention s'applique à tout système électronique dans lequel un dispositif émetteur ou signataire envoie une signature électronique à un dispositif récepteur ou vérifieur chargé de vérifier la validité de la signature. La signature électronique ou numérique se rapporte généralement à un message électronique qui est envoyé, conjointement avec la signature, au dispositif vérifieur. La signature a alors pour fonction d'authentifier le message et l'identité de son auteur.

Le procédé qui va être décrit vient en complément des algorithmes de génération et de vérification de signatures numériques connus, tel que l'algorithme DSA (Digital Signature Algorithm) décrit dans la demande de brevet américain US 5,231,668 et annoncé le 30 août 1991 au Registre Fédéral tenu par le US National Institute of Standards and Technology, pages 42980-42982.

Afin de mieux comprendre l'invention, on va rappeler ce qu'est un algorithme DSA.

Comme déjà exposé dans la demande de brevet français publiée sous le n° 2 733 378, une signature DSA est constituée par une paire {r, s} de grands nombres représentés par de longues chaînes de chiffres binaires (160 chiffres). La signature numérique est calculée à l'aide d'une série de règles de calcul, définies par l'algorithme, et d'un ensemble de paramètres utilisés dans ces calculs. L'algorithme permet d'une part de générer des signatures, et d'autre part de vérifier des signatures.

La génération de signature DSA fait intervenir une clé privée. La vérification fait intervenir une clé publique qui est liée à la clé privée mais qui ne lui est pas identique. Chaque utilisateur possède une paire de clés (privée, publique). Les clés publiques peuvent être connues de tous, alors que les clés privées ne sont jamais dévoilées. Toute personne a la capacité de vérifier la signature d'un utilisateur en utilisant la clé publique de celui-ci, mais seul le possesseur de la clé privée peut générer une signature correspondant à la paire de clés.

Les paramètres de l'algorithme DSA sont les suivants :

- un nombre premier p tel que $2^{L-1} < p < 2^L$ pour L compris entre 512 et 1024 (bornes comprises), et L=64a pour un a entier quelconque ;
- un nombre premier q tel que $2^{159} < q < 2^{160}$et p-1 est un multiple de q ;
- un nombre g, d'ordre q modulo p, tel que : $g = h^{(p-1)/q}$ modulo p, où h est un entier quelconque vérifiant 1 < h < p-1 et g > 1 ;
- un nombre x généré aléatoirement ou pseudo-aléatoirement (c'est la clé privée) ;
- un nombre y défini par la relation $y = g^x$ modulo p ; (c'est la clé publique) ; les opérations modulaires définies ci-après, modulo p ou modulo q seront désignés par mod p ou mod q respectivement ;
- un nombre k généré aléatoirement ou pseudo-aléatoirement, tel que 0 < k < q.

Les entiers p, q, et g sont des paramètres du système pouvant être publiés et/ou partagés par un groupe d'utilisateurs. Les clés, privée et publique, d'un signataire sont respectivement x et y. Le paramètre k, aléatoire, doit être régénéré pour chaque nouvelle signature. Les paramètres x et k sont utilisés pour la génération de signatures et doivent être gardés secrets.

Afin de signer un message m (qui sera en général une valeur hachée d'un fichier initial M), le signataire calcule la signature {r, s} par :

$$r = (g^k \bmod p) \bmod q,$$

et

$$s = (m + xr)/k \bmod q$$

(où la division par k s'étend modulo q, c'est-à-dire que 1/k est le nombre k' tel que kk' = 1 mod q ; par exemple si q = 5 et k = 3, alors 1/k' = 2 car 3x2 = 6, soit 1 mod 5).

Après avoir testé que r et s sont différents de zéro, la signature {r, s} est envoyée au vérifieur.

Le vérifieur, qui connaît p, q, g (liés à l'application), y (lié à l'utilisateur), et m (le message qu'il a également reçu de l'organe signataire), calcule :

$$w = (1/s) \bmod q$$

$$u1 = mw \bmod q$$

$$u2 = rw \bmod q$$

$$v = [g^{u1}.y^{u2} \bmod p] \bmod q$$

Or, cette valeur $[g^{u1}.y^{u2} \bmod p] \bmod q$ est justement égale à r si s a la valeur (m + xr)/s mod q.

Par conséquent, le dispositif vérifieur reçoit r et s et vérifie que v est bien égal à r pour accepter la signature, ou la rejeter dans le cas contraire.

La signature permet à la fois de certifier l'identité du signataire (parce qu'elle fait intervenir une clé privée propre au signataire) et l'intégrité du message signé (parce qu'elle fait intervenir le message lui-même).

Un haut niveau de sécurité n'est garanti que si la clé privée reste secrète vis à vis des tiers. Or, il existe des programmes de type cheval de troie, appelés aussi parfois anti-programmes, qui sous l'apparence de programmes inoffensifs, contiennent en réalité des fonctions illicites cachées destinées à contourner les mécanismes de sécurité du système informatique de l'organe signataire en vue de pénétrer par effraction dans ses fichiers pour les consulter, les modifier ou les détruire. Ce type de programme est alors capable d'accéder à des données secrètes dans l'organe signataire, par exemple à la clé privée utilisée dans l'algorithme DSA.

Pour augmenter la sécurité des systèmes utilisant des signatures électroniques, l'utilisation d'un code représentatif de la machine physique employée pour générer la signature est déjà connue. Plus particulièrement, le document EP-A-0 689 316 divulgue un procédé de signature électronique, comportant la génération d'une signature numérique par un organe signataire qui calcule cette signature en fonction d'une donnée secrète, et la vérification de la signature par un organe vérifieur, qui vérifie si une condition mathématique est remplie par ladite signature, l'organe signataire récupérant, lors de la génération de la signature, un code représentatif de la machine physique employée pour générer ladite signature, puis transmet ce code audit organe vérifieur, ledit code généré étant indépendant de la donnée secrète, et la vérification consistant en outre à vérifier si la signature a été générée a l'aide d'une machine physique habilitée, cette seconde condition étant vérifiée en utilisant ledit code envoyé par l'organe signataire. Mais ce procédé ne protège pas le système de signature électronique contre une modification malveillante, lors de la génération de la signature, qui pourrait apparaître même si la signature a été générée a l'aide d'une machine physique habilitée.

Un but de l'invention est d'augmenter la sécurité des systèmes utilisant des signatures électroniques.

L'idée de l'invention est de s'assurer non seulement de la validité de la signature électronique mais aussi de la manière dont elle a été générée. Il s'agit de vérifier notamment si la signature a été générée par des moyens habilités par l'autorité contrôlant l'organe vérifieur. Par exemple, dans le cas d'une transaction électronique, il s'agit de vérifier que la signature électronique attachée à la transaction électronique a été générée par un programme de signature agréé par l'autorité qui gère les transactions.

Aussi, selon l'invention, l'organe signataire fournit à l'organe vérifieur non seulement une signature électronique mais également un code représentatif du programme employé pour générer la signature. La signature et le code sont envoyés à l'organe vérifieur qui vérifie leur validité.

L'invention concerne donc un procédé de signature électronique, comportant la génération d'une signature numérique par un organe signataire qui calcule cette signature en fonction d'une donnée secrète, et la vérification de la signature par un organe vérifieur qui vérifie si une condition mathématique est remplie par ladite signature,
caractérisé en ce que l'organe signataire calcule en outre, lors de la génération de la signature, un code représentatif du programme employé pour générer ladite signature puis le transmet audit organe vérifieur, ledit code généré étant indépendant de la donnée secrète, et
en ce que la vérification consiste en outre à vérifier si la signature a été générée à l'aide d'un programme habilité.

Le code constitue un niveau de sécurité supplémentaire permettant de s'assurer que la signature a été générée par des moyens de l'organe signataire habilités par l'organe vérifieur.

Selon une caractéristique de l'invention, la vérification de ladite seconde condition consiste à générer dans l'organe vérifieur, à l'aide d'un programme identique à celui de l'organe signataire, une signature non personnalisée établie sur la base d'une donnée quelconque remplaçant ladite donnée secrète afin d'obtenir le code représentatif du programme employé, et à le comparer avec le code transmis par l'organe signataire. La seconde condition est vérifiée si le code ainsi généré par l'organe vérifieur et le code transmis par l'organe signataire sont identiques.

Le code peut être généré sur la base d'instructions exécutées par le programme de génération de la signature.

L'invention a également pour objet un programme d'ordinateur de génération et de vérification de signature électronique destiné à la mise en oeuvre des étapes du procédé décrit précédemment dans un ordinateur.

Enfin, l'invention a pour objet tout support d'enregistrement, tel que disquette, disque CD-ROM ou mémoire, puce électronique, comprenant ledit programme d'ordinateur.

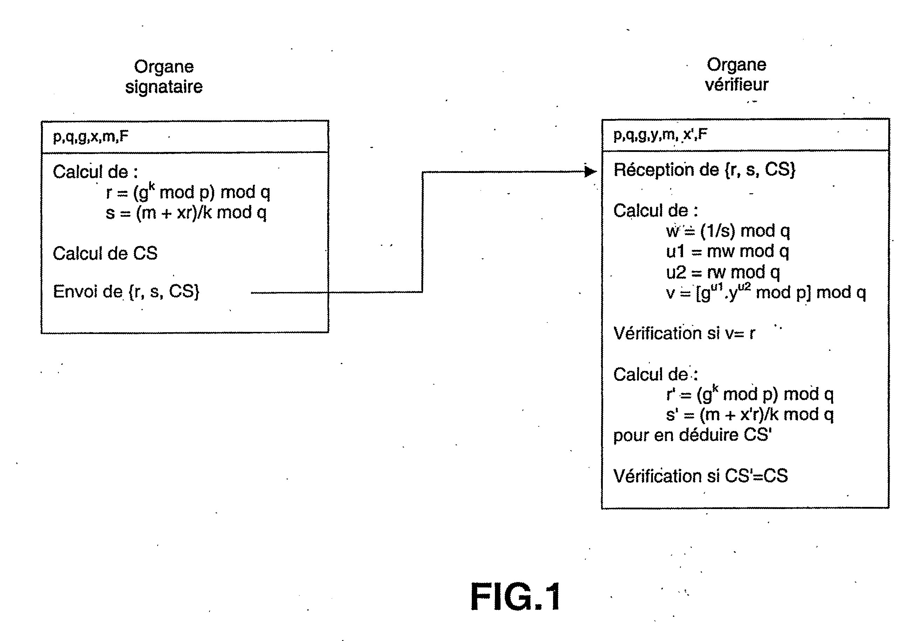

D'autres caractéristiques et avantages de l'invention apparaîtront à la lecture de la description détaillée qui suit et qui est en référence à la figure 1, unique, qui représente un organigramme du procédé de l'invention dans le cas d'une génération et d'une vérification de signature conformes à l'algorithme DSA décrit précédemment.

Selon l'invention, il est prévu que l'organe signataire délivre en plus de la signature numérique un code, noté ci-après CS, caractérisant le programme employé pour générer la signature.

Le programme de signature est exécuté dans une machine physique, par exemple de type PC ou Macintosh™, ou une machine virtuelle, par exemple du type de celle employée dans les plate-formes JAVA™.

Génération du code CS

Selon l'invention, le code CS est généré sur la base des instructions du programme de génération de signature, par exemple sur la base du code machine des instructions de ce programme. Bien entendu, pour éviter tout risque de divulgation de données secrètes (par exemple, la clé privée) contenues dans le programme, il est prévu de ne sélectionner que des instructions ne faisant pas intervenir ces données secrètes.

En pratique, au moment de l'exécution d'une instruction du programme de signature, on la teste pour savoir si elle contient des données secrètes puis, si ce n'est pas le cas, on mémorise son code machine ou une partie de celui-ci dans une mémoire non volatile de l'organe signataire. Des critères complémentaires peuvent être prévus pour déterminer les instructions à stocker dans la mémoire non volatile.

On teste ainsi toutes les instructions du programme pour mémoriser, dans la mémoire non volatile de l'organe signataire, les codes machine d'instructions ne comportant pas de données secrètes. On traite ensuite ces codes machine pour former un code CS représentatif du programme employé pour générer la signature électronique.

De préférence, on effectue une opération de hachage sur les codes machine enregistrés. L'opération de hachage est réalisée au moyen d'une fonction de hachage. On rappelle qu'une fonction de hachage d'un nombre, représenté par une chaîne de bits, consiste en la production d'une nouvelle chaîne de bits de longueur déterminée, longueur différente ou non de la chaîne de départ, à partir de fonctions logiques exécutées sur des groupes de bits de la chaîne de départ. Les fonctions de hachage les plus connues sont la fonction SHA et la fonction MD4. Le code obtenu à la fin de l'opération de hachage est le code CS qui sera envoyé à l'organe vérifieur.

L'opération de hachage permet non seulement de crypter le code des instructions mémorisées mais également de choisir la longueur du code en fin d'opération. Par ailleurs, à l'instar d'une empreinte digitale, le code obtenu à l'issue de l'opération de hachage est fonction du contenu des instructions et de leurs positions dans la mémoire non volatile de l'organe signataire.

En variante, on peut choisir de traiter différemment les codes machine enregistrés dans la mémoire non volatile de l'organe signataire. On peut par exemple les combiner ensemble par une opération logique de type OU EXCLUSIF. Dans cette variante, chaque code machine est combiné avec le contenu d'un registre de l'organe signataire par une opération de type OU EXCLUSIF et après chaque opération, le résultat est enregistré dans le registre. Le registre est initialisé avant le début de la première opération OU EXCLUSIF. Il est initialisé soit à zéro, soit à une valeur particulière, par exemple le numéro d'identification du processeur de la machine sur lequel tourne le programme de signature. Le code CS est le code présent dans le registre lorsque tous les codes machine de la mémoire volatile de l'organe signataire ont été traités par l'opération OU EXCLUSIF.

Ces deux modes de génération du code CS (par une fonction de hachage ou une opération OU EXCLUSIF) ne sont donnés qu'à titre d'exemple. Bien entendu, tous les traitements permettant de générer un code CS à partir des instructions du programme de signature sont applicables au procédé de l'invention.

Le code CS généré par l'organe signataire est envoyé à l'organe vérifieur conjointement avec la signature numérique. Il est par exemple concaténé à la signature. En variante, on peut directement intégrer le code CS dans la signature électronique.

VERIFICATION DU CODE CS

L'organe vérifieur reçoit le code CS et la signature électronique après avoir reçu préalablement le message électronique. Dans le cas de l'algorithme DSA, l'organe vérifieur va alors calculer la valeur v à l'aide de la clé publique et vérifier que v est égale à r. Selon une caractéristique importante de l'invention, il doit également vérifier une seconde condition visant à s'assurer que la signature a été générée par des moyens habilités par l'organe vérifieur. Cette seconde condition constitue une sécurité supplémentaire pour le signataire et pour le vérifieur. Si les deux conditions sont'vérifiées, la signature sera acceptée.

La deuxième condition consiste à vérifier que le code CS généré par l'organe signataire est celui attendu par l'organe vérifieur.

Pour réaliser cette vérification, on génère dans l'organe vérifieur, à l'aide d'un programme identique à celui de l'organe signataire, une signature non personnalisée établie sur la base d'une donnée quelconque remplaçant la donnée secrète car l'organe vérifieur ne connaît pas la donnée secrète. Un code CS' est généré à partir d'instructions du programme générant la signature non personnalisée comme dans l'organe signataire. Les instructions retenues pour générer le code CS' sont sélectionnées selon les mêmes critères que dans l'organe signataire. Au final, les instructions sélectionnées par l'organe vérifieur doivent être les mêmes que celles sélectionnées par l'organe signataire. Le code machine des instructions sélectionnées subit ensuite le même traitement logique (opération OU EXCLUSIF ou fonction de hachage) que celui mis en oeuvre dans l'organe signataire pour générer le code CS. Le code CS' ainsi généré est ensuite comparé au code CS. Si les codes CS et CS' sont différents, c'est que l'opération de génération de la signature ne s'est pas déroulée correctement dans l'organe qui a émis la signature (c'est-à-dire qu'elle ne s'est pas déroulée comme il est prévu dans l'organe vérifieur) et la signature est rejetée même si son authenticité est confirmée par l'organe vérifieur. Par contre, si les deux conditions sont remplies (v=r et CS'=CS), la signature est acceptée.

La figure 1 montre l'organigramme du procédé de l'invention dans le cas d'une génération et d'une vérification de signatures électroniques selon un algorithme DSA correspondant à celui exposé dans le préambule de la présente demande.

L'organe signataire dispose des paramètres p, q et g, de la clé secrète x, d'une fonction de hachage F et du message m. Il calcule d'abord la signature {r,s} puis le code CS par application de la fonction de hachage F sur la chaîne de bits formée par certaines instructions du programme de signature. La signature {r,s} et le code CS sont transmis à l'organe vérifieur. L'organe vérifieur qui connaît les paramètres p, q et g, la clé publique y, la fonction de hachage F et le message m calcule alors v et vérifie si v est égale à r. Selon l'invention, il génère également une nouvelle signature {r',s'} sur la base d'une donnée quelconque x' de même longueur que la clé secrète x à l'aide d'un programme de signature identique à celui de l'organe signataire. Ce programme est mis en oeuvre sur la machine physique ou virtuelle de l'organe signataire. Un code CS' est ensuite généré sur la base d'instructions du programme de signature répondant aux mêmes critères que ceux utilisés dans l'organe signataire. On vérifie ensuite que CS'=CS. Si les deux conditions, à savoir v=r et CS'=CS, ne sont pas vérifiées, la signature {r,s} est refusée par l'organe vérifieur.

L'invention est applicable à tout type de système électronique dans lequel un organe signataire envoie une signature électronique à un organe vérifieur chargé de vérifier la validité de la signature. L'organe signataire peut être par exemple une carte à puce à microprocesseur et l'organe vérifieur un terminal de lecture de la carte.

## Revendications

1. Procédé de signature électronique, comportant la génération d'une signature numérique par un organe signataire qui calcule cette signature en fonction d'une donnée secrète, et la vérification de la signature par un organe vérifieur qui vérifie si une condition mathématique est remplie par ladite signature,
**caractérisé en ce que** l'organe signataire calcule en outre, lors de la génération de la signature, un code représentatif du programme employé pour générer ladite signature puis le transmet audit organe vérifieur, ledit code généré étant indépendant de la donnée secrète, et
**en ce que** la vérification consiste en outre à vérifier si la signature a été générée à l'aide d'un programme habilité.

2. Procédé selon la revendication 1, **caractérisé en ce que** la vérification de ladite seconde condition consiste à générer dans ledit organe vérifieur, à l'aide d'un programme identique à celui dudit organe signataire, une signature non personnalisée établie sur la base d'une donnée quelconque remplaçant ladite donnée secrète afin d'obtenir le code représentatif du programme employé, et à le comparer avec le code transmis par l'organe signataire, la seconde condition étant vérifiée si le code ainsi généré par l'organe vérifieur et le code transmis par l'organe signataire sont identiques.

3. Procédé selon la revendication 2, **caractérisé en ce que** ledit code représentatif du programme employé pour générer la signature est généré dans l'organe signataire et dans l'organe vérifieur sur la base d'instructions exécutées par le programme de génération de la signature, lesdites instructions étant indépendantes, de ladite donnée secrète et de ladite donnée quelconque.

4. Procédé selon la revendication 3, **caractérisé en ce que**, pour générer le code représentatif du programme, on sélectionne des instructions du programme de génération de la signature qui sont indépendantes de la donnée secrète et de la donnée quelconque, et on combine les codes des instructions sélectionnées entre eux par une opération de type OU EXCLUSIF.

5. Procédé selon la revendication 3, **caractérisé en ce que**, pour générer le code représentatif du programme, on sélectionne des instructions du programme de génération de la signature qui sont indépendantes de la donnée secrète et de la donnée quelconque, et on réalise une opération de hachage sur les codes des instructions sélectionnées.

6. Procédé selon l'une des revendications 1 à 5,
**caractérisé en ce que** le code représentatif du programme généré par l'organe signataire est concaténé à la signature et est transmis simultanément avec celle-ci.

7. Procédé selon l'une des revendications 1 à 5, **caractérisé en ce que** le code représentatif du programme est intégré dans la signature électronique.

8. Ordinateur comprenant un programme apte à mettre en oeuvre la génération du code représentatif d'un programme de signature selon une des revendications 1 à 7, soit en tant qu'organe signataire, soit en tant qu'organe vérifieur.

9. Ordinateur selon la revendication 8 **caractérisé en ce qu'**il est une puce à microprocesseur d'un support d'enregistrement de type carte à puce.

10. Ordinateur selon la revendication 8 **caractérisé en ce qu'**il est un lecteur de carte à puce.

## Claims

1. Electronic signature method, including the generation of a digital signature by a signing element that calculates this signature according to a secret piece of data, and the verification of the signature by a verifying element that verifies whether a mathematical condition is fulfilled by said signature,
**characterised in that** the signing element also calculates, when generating the signature, a code that represents the program used to generate said signature and then sends it to said verifying element, said generated code being independent from the secret data, and
**in that** the verification also consists of verifying whether the signature was generated using an authorised program.

2. Method according to claim 1, **characterised in that** the verification of said second condition consists of generating in said verifying element, using a program that is identical to that of said signing element, a non-personalised signature established according to any other data whatsoever replacing said secret data in order to obtain the code that represents the program used, and to compare it with the code sent by the signing element, the second condition being verified if the code thus generated by the verifying element and the code sent by the signing element are identical.

3. Method according to claim 2, **characterised in that** said code that represents the program used to generate the signature is generated in the signing element and in the verifying element according to instructions performed by the program that generates the signature, said instructions being independent from said secret data and said other data.

4. Method according to claim 3, **characterised in that**, in order to generate the code that represents the program, instructions of the program for generating the signature that are independent from the secret data and the other data are selected, and the codes of the selected instructions are combined with each other by means of an EXCLUSIVE OR operation.

5. Method according to claim 3, **characterised in that**, in order to generate the code that represents the program, instructions of the program for generating the signature that are independent from the secret data and the other data are selected, and a hashing operation is performed on the selected instruction codes.

6. Method according to one of the claims from 1 to 5, **characterised in that** the code that represents the program generated by the signing element is concatenated to the signature and is sent simultaneously with the latter.

7. Method according to one of the claims from 1 to 5, **characterised in that** the code that represents the program is integrated in the electronic signature.

8. Computer comprising a program that can implement the generation of the code that represents a signature program according to one of the claims from 1 to 7, either as the signing element or as the verifying element.

9. Computer according to claim 8, **characterised in that** it is a chip with a microprocessor of a chip-card magnetic medium.

10. Computer according to claim 8, **characterised in that** it is a chip-card reader.

**Patentansprüche**

1. Elektronisches Signaturverfahren, umfassend die Erzeugung einer digitalen Signatur durch ein Signaturorgan, das diese Signatur gemäß einer geheimen Information berechnet, und die Prüfung der Signatur durch ein Prüforgan, das prüft, ob die besagte Signatur eine mathematische Bedingung erfüllt, **dadurch gekennzeichnet, dass** das Signaturorgan ferner bei der Erzeugung der Signatur einen Code für das zur Erzeugung der besagten Signatur verwendete Programm berechnet und diesen an das besagte Prüforgan überträgt, wobei der erzeugte Code unabhängig ist von der geheimen Information, und
die Prüfung ferner darin besteht, zu prüfen, ob die Signatur anhand eines zugelassenen Programms erzeugt wurde.

2. Verfahren nach Anspruch 1, **dadurch gekennzeichnet, dass** die Prüfung der besagten zweiten Bedingung darin besteht, in dem Prüforgan anhand eines mit dem Programm des Signaturorgans identischen Programms eine nicht personalisierte Signatur zu erzeugen, auf der Basis einer beliebigen, die besagte geheime Information ersetzenden Information, um den Code für das benutzte Programm zu erhalten, und ihn mit dem von dem Signaturorgan übertragenden Code zu vergleichen, wobei die zweite Bedingung erfüllt ist, wenn der so von dem Prüforgan erzeugte Code und der von dem Signaturorgan übertragene Code identisch sind.

3. Verfahren nach Anspruch 2, **dadurch gekennzeichnet, dass** der besagte Code für das für die Erzeugung der Signatur verwendete Programm in dem Signaturorgan und in dem Prüforgan erzeugt wird auf der Basis von Anweisungen, die von dem Erzeugungsprogramm der Signatur ausgeführt werden, wobei die besagten Anweisungen unabhängig sind von der besagten geheimen und der besagten beliebigen Information.

4. Verfahren nach Anspruch 3, **dadurch gekennzeichnet, dass** man für die Erzeugung des Codes für das Programm Anweisungen des Erzeugungsprogramms der Signatur wählt, die unabhängig sind von der geheimen und der beliebigen Information, und dass man die Codes der gewählten Anweisungen anhand einer Operation des Typs ODER EXKLUSIV miteinander verknüpft.

5. Verfahren nach Anspruch 3, **dadurch gekennzeichnet, dass** man für die Erzeugung des Codes für das Programm Anweisungen des Erzeugungsprogramms der Signatur wählt, die unabhängig sind von der geheimen und der beliebigen Information, und dass man eine Zerhackungsoperation an den Codes der gewählten Anweisungen durchführt.

6. Verfahren nach einem der Ansprüche 1 bis 5, **dadurch gekennzeichnet, dass** der von dem Signaturorgan erzeugte Code für das Programm mit der Signatur verkettet und gleichzeitig mit dieser übertragen wird.

7. Verfahren nach einem der Ansprüche 1 bis 5, **dadurch gekennzeichnet, dass** der Code des Programms in die elektronische Signatur integriert wird.

8. Computer mit einem für die Durchführung der Erzeugung des Codes eines Signaturprogramms geeigneten Programm nach einem der Ansprüche 1 bis 7, entweder als Signaturorgan oder als Prüforgan.

9. Computer nach Anspruch 8, **dadurch gekennzeichnet, dass** er ein Mikroprozessorchip eines Aufzeichnungsträgers des Typs Chipkarte ist.

10. Computer nach Anspruch 8, **dadurch gekennzeichnet, dass** er ein Chipkarten-Lesegerät ist.

Organe signataire

p,q,g,x,m,F

Calcul de :

$r = (g^k \bmod p) \bmod q$

$s = (m + xr)/k \bmod q$

Calcul de CS

Envoi de {r, s, CS}

Organe vérifieur

p,q,g,y,m, x',F

Réception de {r, s, CS}

Calcul de :

$w = (1/s) \bmod q$

$u1 = mw \bmod q$

$u2 = rw \bmod q$

$v = [g^{u1}.y^{u2} \bmod p] \bmod q$

Vérification si v= r

Calcul de :

$r' = (g^k \bmod p) \bmod q$

$s' = (m + x'r)/k \bmod q$

pour en déduire CS'

Vérification si CS'=CS

FIG.1